(19) **Europäisches Patentamt / European Patent Office / Office européen des brevets**

(11) **EP 4 707 430 A2**

(12) # EUROPEAN PATENT APPLICATION

(43) Date of publication:
**11.03.2026 Bulletin 2026/11**

(21) Application number: **25188324.5**

(22) Date of filing: **09.07.2025**

(51) International Patent Classification (IPC):
**C25B 1/04** $^{(2021.01)}$      **C25B 11/065** $^{(2021.01)}$
**C25B 11/089** $^{(2021.01)}$      **C25B 11/091** $^{(2021.01)}$

(52) Cooperative Patent Classification (CPC):
**C25B 1/04; C25B 11/065; C25B 11/089; C25B 11/091**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.09.2024 KR 20240122376**

(71) Applicant: **SK Innovation Co., Ltd.**
**Seoul 03188 (KR)**

(72) Inventors:
• **LIM, Yun Ji**
 **34124 Daejeon (KR)**

• **HAN, Hyun Su**
 **34124 Daejeon (KR)**
• **LEE, Tae Kyoung**
 **34124 Daejeon (KR)**
• **SEOK, Tae Hong**
 **34124 Daejeon (KR)**
• **LEE, Seung Ok**
 **34124 Daejeon (KR)**
• **LEE, Hee Bin**
 **34124 Daejeon (KR)**
• **IM, Ju Hwan**
 **34124 Daejeon (KR)**

(74) Representative: **Prüfer & Partner mbB**
**Patentanwälte · Rechtsanwälte**
**Sohnckestraße 12**
**81479 München (DE)**

(54) **CATALYST FOR WATER ELECTROLYSIS ELECTRODE, PREPARING METHOD OF CATALYST FOR WATER ELECTROLYSIS ELECTRODE, WATER ELECTROLYSIS ELECTRODE, AND WATER ELECTROLYSIS SYSTEM**

(57)   A catalyst for water electrolysis electrode, a preparing method of the catalyst for water electrolysis electrode, and a water electrolysis electrode may be provided. A catalyst for water electrolysis electrode according to an embodiment of the present disclosure includes a carbon structure doped with a first element and a second element, and an alloy nanoparticle doped with the first element. The alloy nanoparticle is supported on a surface of the carbon structure, and the first element is iron (Fe). Further may be provided a water electrolysis electrode comprising the catalyst, a water electrolysis system comprising the catalyst or comprising the water electrolysis electrode, and a use of the catalyst for water electrolysis.

FIG. 1

**Description**

**BACKGROUND**

1. Technical Field

The present disclosure generally relates to a catalyst for water electrolysis electrode, a preparing method of the catalyst for water electrolysis electrode, a water electrolysis electrode, a use of the catalyst for water electrolysis electrode and a use of the water electrolysis electrode, and to a water electrolysis system.

2. Related Art

Hydrogen energy is a clean energy source that is gaining attention as one of the most promising alternatives for solving energy problems in the long term. Among the hydrogen production methods, water electrolysis, which uses electric energy to split water into hydrogen and oxygen, and thus does not emit carbon dioxide, has attracted a lot of attention because it is environmentally friendly and can contribute significantly to achieving carbon neutrality.

The water electrolysis reaction includes the Oxygen Evolution Reaction (OER), which occurs at the oxygen evolution electrode of the water electrolysis system, and the Hydrogen Evolution Reaction (HER), which occurs at the hydrogen evolution electrode, and the half-cell reaction and the full reaction in acidic and alkaline media, respectively, can be represented as shown in Formulae 1 and 2 below.

[Formula 1] (in acidic media)        Oxygen evolution reaction (OER): $2H_2O(l) \rightarrow O_2(g) + 4H^+ + 4e^-$ Hydrogen evolution reaction (HER): $4H^+ + 4e^- \rightarrow 2H_2(g)$ Full reaction: $H_2O(l) \rightarrow H_2(g) + 1/2O_2(g)$

[Formula 2] (in alkaline media)        Oxygen evolution reaction (OER): $2OH^- \rightarrow 1/2O_2(g) + H_2O(l) + 2e^-$ Hydrogen evolution reaction (HER): $2H_2O(l) + 2e^- \rightarrow H_2(g) + 2OH^-$ Full reaction: $H_2O(l) \rightarrow H_2(g) + 1/2O_2(g)$

The water electrolysis reaction using an anion exchange membrane in the alkaline medium mainly uses precious metal-based catalysts for electrodes such as platinum and iridium to reduce the reaction overpotential and increase the performance and efficiency of hydrogen or oxygen evolution. However, the application of precious metal-based catalysts is entails high costs and difficulty in controlling supply and demand.

Therefore, there is a need to develop catalysts for water electrolysis electrodes, and more specifically, catalysts for hydrogen evolution electrodes, that can replace precious metal-based catalysts or reduce the precious metal content, while still having high hydrogen evolution reaction performance.

**SUMMARY**

One aspect of the present disclosure refers to, as a non-precious metal-based catalyst for water electrolysis electrode with low transition metal loading, a catalyst for water electrolysis electrode having excellent hydrogen evolution reaction performance, and a further aspect of the present disclosure refers to a water electrolysis electrode including the catalyst.

Another aspect of the present disclosure refers to a method of preparing a catalyst for water electrolysis electrode that can efficiently prepare the catalyst for water electrolysis electrode. Another aspect of the present disclosure refers to a use of the catalyst for water electrolysis electrode for water electrolysis, and to a use of the water electrolysis electrode for being included in a water electrolysis system. Another aspect of the present disclosure refers to a water electrolysis system, comprising the catalyst for water electrolysis electrode, and/or comprising the water electrolysis electrode.

A catalyst for water electrolysis electrode according to an embodiment of the present disclosure includes a carbon structure doped with a first element and a second element, and an alloy nanoparticle doped with the first element. The alloy nanoparticle is supported on a surface of the carbon structure, and the first element is iron (Fe).

According to an embodiment, the carbon structure may include at least one selected from a group consisting of carbon black, carbon nanotube, carbon nanofiber, carbon nanoribbon, fullerene, graphene, graphene nanoplatelet, and graphite.

According to an embodiment, the second element may be nitrogen.

According to an embodiment, the alloy nanoparticle may be a nickel-cobalt (Ni-Co) alloy nanoparticle.

According to an embodiment, the nickel-cobalt alloy nanoparticle may include an excess of cobalt relative to nickel.

According to an embodiment, the catalyst for water electrolysis electrode may be an Fe-N-C based catalyst supporting a nickel-cobalt alloy nanoparticle doped with iron (Fe).

According to an embodiment, the first element may be included in an amount from 0.01 wt% to 0.10 wt% based on a total weight of the catalyst for water electrolysis electrode.

One aspect of the present disclosure which refers to a method of preparing a catalyst for water electrolysis electrode includes: forming a carbon composite doped with a first element by contacting a carbon precursor with a first element precursor solution; and impregnating the carbon composite doped with the first element into a metal precursor solution. The first element is iron (Fe), and the metal precursor solution includes two or more different transition metal precursors.

According to an embodiment, the carbon precursor may include at least one selected from a group consisting of carbon black, carbon nanotube, carbon nanofiber, carbon nanoribbon, fullerene, graphene, graphene nanoplatelet, and graphite. In an embodiment, the carbon precursor includes, or is, carbon black, such as Vulcan XC-72R Carbon.

According to an embodiment, the first element precursor solution may include at least one selected from a group consisting of iron chloride, iron nitrate, iron acetate, iron sulfate, iron trifluoromethanesulfonate, iron citrate, iron acetylacetonate, and iron pyrophosphate, or a mixture thereof. In an embodiment, the first element precursor solution includes, or is, an aqueous solution of iron chloride, such as an aqueous solution of iron chloride hexahydrate dissolved in distilled water.

According to an embodiment, in forming the carbon composite doped with the first element, the carbon precursor may be nitrogen-treated (e.g., with a mixed solution of $HNO_3$ and $H_2SO_4$, e.g. a mixed solution of 6 M $HNO_3$ and 6 M of $H_2SO_4$), for a sufficient period of time, such as 24 hours), and then may be contacted with the first element precursor solution.

According to an embodiment, the metal precursor solution may include a nickel (Ni) precursor and a cobalt (Co) precursor.

According to an embodiment, the method may further include heat treating the metal precursor solution impregnated with the carbon composite doped with the first element in an inert atmosphere.

According to an embodiment, in heat treating the metal precursor solution, the metal precursor solution may be heat treated for 30 minutes to 2 hours at a temperature of 600°C to 1000°C.

A water electrolysis electrode according to embodiments of the present disclosure includes a substrate, and a catalyst for water electrolysis electrode loaded onto the substrate. In one embodiment, the catalyst for water electrolysis is as disclosed herein. The catalyst for water electrolysis electrode includes a carbon structure doped with a first element and a second element, and an alloy nanoparticle doped with the first element. The alloy nanoparticle is supported on a surface of the carbon structure, and the first element is iron (Fe).

According to an embodiment, the alloy nanoparticle may be a nickel-cobalt (Ni-Co) alloy nanoparticle.

According to an embodiment, the catalyst for water electrolysis electrode may be an Fe-N-C based catalyst supporting a nickel-cobalt alloy nanoparticle doped with iron (Fe).

According to an embodiment, the first element may be included in an amount from 0.01 wt% to 0.10 wt% based on a total weight of the catalyst for water electrolysis electrode.

According to an embodiment, a loading amount of the catalyst for water electrolysis electrode may be from 0.1 mg/cm$^2$ to 5.0 mg/cm$^2$.

According to an embodiment, the water electrolysis electrode may have a Tafel slope of 200 mV/dec or less.

In a further aspect, the present disclosure provides a water electrolysis system comprising the water electrolysis catalyst or the water electrolysis electrode according to the present disclosure.

According to an embodiment, the water electrolysis system may comprise a membrane electrode assembly, optionally wherein the membrane electrode assembly may include a separator, a cathode located in one space separated by the separator, an anode located in another space separated by the separator, and an electrolyte in which the cathode and the anode are immersed or which is at least in contact with the cathode and the anode.

According to an embodiment, the water electrolysis electrode according to the present disclosure may be used as catalyst for water electrolysis. According to an embodiment, the catalyst may be included in a water electrolysis electrode.

**BRIEF DESCRIPTION OF THE DRAWINGS**

FIG. 1 is a diagram illustrating an example of a surface structure of a catalyst for water electrolysis electrode according to an embodiment of the present disclosure;

FIG. 2 is a block diagram illustrating an example of a method of preparing a catalyst for water electrolysis electrode according to an embodiment of the present disclosure;

FIG. 3 is an image showing TEM imaging and EDS mapping results of a catalyst for water electrolysis electrode prepared according to the example of the Preparation Example of the present disclosure;

FIG. 4 is a graph showing an XRD pattern of a catalyst for water electrolysis electrode prepared according to the example of the Preparation Example of the present disclosure;

FIG. 5 is a diagram illustrating an example of a three-electrode system configured to evaluate electrochemical characteristics;

FIG. 6 is a graph of current density vs. voltage curves by evaluating hydrogen evolution reaction performance of each of water electrolysis electrodes prepared according to the example of the Preparation Example, and prepared according to the Comparative Example 1, Comparative Example 3, and Comparative Example 4;

FIG. 7 is a graph of overpotential vs. log current density curves by evaluating hydrogen evolution reaction performance of each of water electrolysis electrodes prepared according to the example of the Preparation Example, and prepared according to the Comparative Example 1, Comparative Example 3, and Comparative Example 4; and

FIG. 8 is a diagram illustrating an example of a surface structure of the catalyst for water electrolysis electrode prepared according to the Comparative Example 3.


## DETAILED DESCRIPTION

Embodiments described herein may be modified in many other ways, so that the technology according to an embodiment is not limited to the embodiments described herein. Further, throughout the specification, references to "including," "comprising," "containing," or "having" any component are not intended to exclude other components, but rather to indicate that other components may be further included unless otherwise stated, and are not intended to exclude elements, materials, or processes not further enumerated.

As used herein, equal or uniform may mean identical or uniform to each other within acceptable tolerances unless otherwise specified. For example, equal in composition or physical property measurements may mean that the two objects being compared are identical within tolerances, as well as being exactly the same. Having the same physical property measurements may mean that the difference in the measurements between the objects is approximately less than 5%, specifically less than 3%, or more specifically less than 1%.

As used herein, numerical ranges include upper and lower bounds and all values within them, increments logically derived from the shape and width of the range being defined, all doubly bounded values, upper and lower bounds of numerical ranges bounded in different forms, and all possible combinations thereof.

Unless otherwise defined herein, "about" may be considered to be a value within 30%, 25%, 20%, 15%, 10%, or 5% of the stated value.

The use of the terms "first," "second," "third," and the like before any component in this specification is intended to avoid confusion as to the component to which it refers, and is not intended to indicate any order, importance, or master-slave relationship between the components. For example, an invention may include only the second component without the first component.

As used herein, the term "contact" or "contacting" may refer to direct physical or chemical contact of one object with another object, or, without limitation, contact of one object with another object via another object. Preferably, but not necessarily, the contact of one object with another object may result in a mutual physical or chemical interaction.

As used herein, the term "salt" can mean, without limitation, any ionic form of a compound or chemical structure, including cationic or anionic compounds, to form an electrically neutral compound or structure.

As used herein, the term "water electrolysis" can mean, without limitation, a reaction or series of processes that uses electrical energy to decompose water ($H_2O$) into gaseous hydrogen ($H_2$) and oxygen ($O_2$).

Hereinafter, the present disclosure will be described in detail. However, this is by way of example only and the disclosure is not limited to the specific embodiments described herein as an example.


## Catalysts for Water Electrolysis Electrode

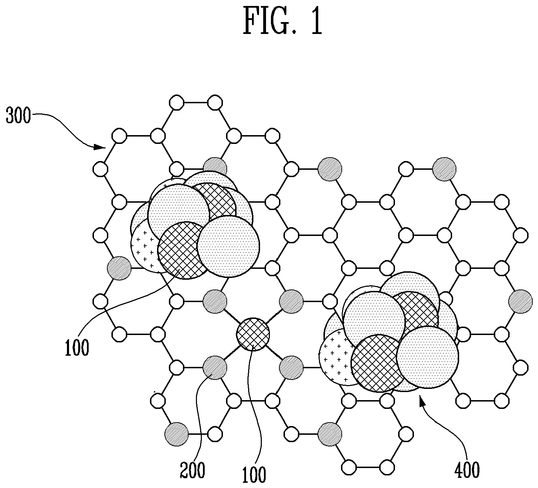

FIG. 1 is a diagram illustrating an example of a surface structure of a catalyst for water electrolysis electrode 10 according to an embodiment of the present disclosure.

The catalyst for water electrolysis electrode 10, according to an embodiment of the present disclosure, includes a carbon structure 300 doped with a first element 100 and a second element 200, and an alloy nanoparticle 400 doped with the first element 100, the alloy nanoparticle 400 is supported on a surface of the carbon structure 300, and the first element 100 may be iron (Fe).

In an embodiment, the catalyst for water electrolysis electrode may include the carbon structure 300 doped with the first element 100 and the second element 200, and the alloy nanoparticle 400 doped with the first element 100.

In an embodiment, the alloy nanoparticle 400 may be supported on the surface of the carbon structure 300. The term "supported" means that the alloy nanoparticle 400 is in adhesion contact with the surface of the carbon structure 200, e.g. after deposition and pyrolysis.

In an embodiment, the carbon structure 300 may be a carbon structure in which the first element 100 and the second element 200 are doped.

In an embodiment, the carbon structure 300 may be a nano-scale or micro-scale structure. For example, the carbon structure 300 may be one of one-dimensional structure or a two-dimensional structure. For example, the carbon structure 300 may be defined as a structure with a variety of shapes, such as a sphere, fiber, disc, wire, web, pillar, rod, ribbon, plate, wall, or tube.

For example, the carbon structure 300 may have a size within the range of, but not necessarily limited to, 0.1 nm to 1000 $\mu$m, specifically 0.1 nm to 100 $\mu$m, more specifically 0.1 nm to 1000 nm, or 0.1 nm to 500 nm.

In an embodiment, the carbon structure 300 may include at least one selected from the group consisting of carbon black, carbon nanotube, carbon nanofiber, carbon nanoribbon, fullerene, graphene, graphene nanoplatelet, and graphite. Although not necessarily limited thereto, the carbon structure 300 may include, in particular, carbon black.

In an embodiment, the carbon black may be a concept including at least one of acetylene black, ketjen black, or super P.

In an embodiment, the graphite may be a concept referring to natural graphite, artificial graphite, or a mixture thereof, without limitation.

In an embodiment, as will be described below, the carbon structure 300 may exist in the form of a composite generated by physicochemical treatment of a precursor. The precursor may be a carbon precursor. The carbon precursor may include, for example, at least one selected from the group consisting of carbon black, carbon nanotube, carbon nanofiber, carbon nanoribbon, fullerene, graphene, graphene nanoplatelet, and graphite, and although not necessarily limited thereto, specifically, the carbon precursor, may include carbon black.

The carbon structure 300 in the composite form may have a hetero-element-doped structure, for example, in which at least one of each carbon atom forming the structure is substituted with a hetero-element, or in which a hetero-element is inserted. In a specific embodiment, the carbon structure 300 may be a carbon structure in the form of a composite doped with the first element 100 and the second element 200.

FIG. 1 is a diagram illustrating an example of a surface of the carbon structure 300. For example, in FIG. 1, the surface of the carbon structure 300 according to an embodiment is shown as a honeycomb structure with an element located at each vertex. At each vertex of the structure are located primarily carbon atoms, as shown in FIG. 1.

Referring to FIG. 1, one or more of the carbon atoms have been substituted with or inserted as the first element 100 or the second element 200. By such substitutions or insertions, a part of the existing honeycomb structure may be modified in the region where the substitution or insertion occurs and in at least a part of the region adjacent thereto. Alternatively, substitutions or insertions such as those described above may leave the existing honeycomb structure intact in the region where the substitution or insertion occurs and in at least a part of the region adjacent thereto.

In an embodiment, the first element 100 is iron (Fe), as described above. The first element 100 may be doped into both the carbon structure 300 and the alloy nanoparticle 400.

For example, the first element 100 may be doped into each of the carbon structure 300 and/or the alloy nanoparticle 400, such that trace amounts are included in each of the carbon structure 300 and/or the alloy nanoparticle 400.

In an embodiment, the second element 200 may be nitrogen.

In a nitrogen doped carbon structure, the nitrogen doped region may provide active sites. The first element 100, specifically iron (Fe), may exist in a coordination-bonded form with the doped nitrogen atom as a monatomic atom.

In such embodiment, the first element 100 may be included in a coordination-bonded form with the second element 200.

For example, the carbon structure may be a carbon structure of an Fe-N-C structure.

Referring back to FIG. 1, in an embodiment, the alloy nanoparticle 400 may be supported on the surface of the carbon structure 300.

In an embodiment, the alloy nanoparticle 400 may be doped with the first element 100.

In an embodiment, the alloy nanoparticle 400 may refer to a particle at the nano-scale, without limitation. For example, the alloy nanoparticle 400 may refer to at least one region having nanoscale dimensions, or an example of a structure having characteristic dimensions. The alloy nanoparticle 400 may be monocrystalline, polycrystalline, amorphous, or a combination thereof.

For example, the alloy nanoparticle 400 may have an average particle size of 0.1 nm to 100 nm, although not necessarily limited thereto. Or, specifically, the alloy nanoparticle may have an average particle size of 0.5 nm or greater, 1 nm or greater, 2 nm or greater, 5 nm or greater, 7 nm or greater, 10 nm or greater, 12 nm or greater, 15 nm or greater, or 20 nm or greater, or 90 nm or less, 80 nm or less, 75 nm or less, 70 nm or less, 65 nm or less, 55 nm or less, 50 nm or less, 45 nm or less, 40 nm or less, 35 nm or less, or 30 nm or less.

In an embodiment, the alloy nanoparticle may be an alloy nanoparticle including an alloy of different metal elements.

In an embodiment, the alloy nanoparticle 400 may be an alloy nanoparticle including an alloy of at least two transition metal elements.

In an embodiment, the alloy nanoparticle 400 may be an alloy nanoparticle including an alloy of at least two different period 4 transition metal elements.

In an embodiment, the alloy nanoparticle 400 may be a nickel-cobalt (Ni-Co) alloy nanoparticle.

In an embodiment, the nickel-cobalt alloy nanoparticle may include an excess of cobalt relative to nickel.

In an embodiment, the nickel-cobalt alloy nanoparticle may include at least 5 times more cobalt than nickel, based on weight. In a specific embodiment, the nickel-cobalt alloy nanoparticle may include 6 times more cobalt than nickel, 6.5 times more, 7 times more, 7.5 times more, or 8 times more cobalt than nickel, based on weight.

Referring back to FIG. 1, in an embodiment, the alloy nanoparticle 400 may be an alloy nanoparticle doped with the first element 100.

In a specific embodiment, the first element 100 may be iron.

Thus, in an embodiment, the alloy nanoparticle 400 may be an iron-doped alloy nanoparticle.

In an embodiment, the iron-doped nickel-cobalt alloy nanoparticle may be an alloy nanoparticle doped with traces of iron.

In an embodiment, the catalyst for water electrolysis electrode 10 may be an Fe-N-C based catalyst supporting an iron (Fe)-doped nickel-cobalt alloy nanoparticle.

In an embodiment, the alloy nanoparticle 400 may cause unconventional reaction specificity due to inter-element interactions. In a specific embodiment, the alloy nanoparticle 400 may cause unconventional reaction specificity for hydrogen evolution reaction due to iron-nickel-cobalt interactions.

In an embodiment, the alloy nanoparticle 400 may be evenly supported on the surface of the carbon structure 300.

In the carbon structure 300, as described above, the transition metal element, more specifically the first element 100 which is iron, may be coordination bonded to a region doped with the second element 200, more specifically nitrogen, and the region may provide an active site. An alloy nanoparticle including substantially an excess of nickel-cobalt, located in the vicinity of such site, may interact with the doped first element 100, more specifically iron, at or in the vicinity of such site. This interaction may further improve the hydrogen evolution reaction performance.

In an embodiment, the first element 100 may be included in an amount from 0.01 wt% or more, and/or to 0.10 wt% or less, respectively based on the total weight of the catalyst for water electrolysis electrode 10. Or, in a specific embodiment, the content of the first element 100 may be greater than or equal to 0.02 wt%, greater than or equal to 0.03 wt%, greater than or equal to 0.04 wt%, or greater than or equal to 0.05 wt%, or less than or equal to 0.09 wt%, less than or equal to 0.08 wt%, less than or equal to 0.07 wt%, less than or equal to 0.06 wt%. In other words, in the catalyst for water electrolysis electrode 10, the first element 100 may be included in an amount between 0.01 wt% to 0.10 wt%, and in a specific embodiment, it may be included in an amount greater than or equal to 0.02 wt%, greater than or equal to 0.03 wt%, greater than or equal to 0.04 wt%, or greater than or equal to 0.05 wt%, or be included in an amount less than or equal to 0.09 wt%, less than or equal to 0.08 wt%, or less than or equal to 0.07 wt%.

In an embodiment, the first element 100 may be included in an amount from 0.10 wt% or more, and/or to 0.50 wt% or less, respectively based on the total weight of the alloy nanoparticle 400. Or, in a specific embodiment, the content of the first element 100 may be greater than or equal to 0.20 wt%, greater than or equal to 0.25 wt%, or greater than or equal to 0.30 wt%, or less than or equal to 0.45 wt%, or less than or equal to 0.40 wt%. In other words, in the alloy nanoparticle 400, the first element 100 may be included in an amount between 0.10 wt% and 0.50 wt%, and in a specific embodiment, in the alloy nanoparticle 400, the first element 100 may be included in an amount greater than or equal to 0.20 wt%, greater than or equal to 0.25 wt%, or greater than or equal to 0.30 wt%, or less than or equal to 0.45 wt%, or less than or equal to 0.40 wt%.

In an embodiment, the second element 200 may be included in an amount from 0.1 wt% or more, and/or to 1.0 wt% or less, respectively based on the total weight of the catalyst for water electrolysis electrode 10. Or, in a specific embodiment, the content of the second element 200 may be greater than or equal to 0.2 wt%, greater than or equal to 0.3 wt%, greater than or equal to 0.4 wt%, or greater than or equal to 0.5 wt%, or less than or equal to 0.9 wt%, less than or equal to 0.8 wt%, or less than or equal to 0.7 wt%. In other words, in the catalyst for water electrolysis electrode 10, the second element 200 may be included in an amount from 0.1 wt% to 1.0 wt%, and in a specific embodiment, may be included in an amount greater than or equal to 0.2 wt%, greater than or equal to 0.3 wt%, greater than or equal to 0.4 wt%, or greater than or equal to 0.5 wt%, or may be included in an amount less than or equal to 0.9 wt%, less than or equal to 0.8 wt%, or less than or equal to 0.7 wt%.

In an embodiment, when the alloy nanoparticle is the nickel-cobalt alloy nanoparticle as described above, the catalyst for water electrolysis electrode 10 may include from 0.1 wt% to 2.0 wt% nickel, and in a specific embodiment, the catalyst for water electrolysis electrode 10 may include from 0.3 wt% or more, 0.5 wt% or more, 0.7 wt% or more, 0.8 wt% or more, or 0.9 wt% or more, or 1.9 wt% or less, 1.8 wt% or less, 1.6 wt% or less, 1.4 wt% or less, 1.2 wt% or less, or 1.1 wt% or less nickel.

In an embodiment, when the alloy nanoparticle is the nickel-cobalt alloy nanoparticle as described above, the catalyst for water electrolysis electrode 10 may include from 1 wt% to 12 wt% cobalt, and in a specific embodiment, the catalyst for water electrolysis electrode 10 may include from 3 wt% or more, from 5 wt% or more, from 6 wt% or more, or from 7 wt% or more, or from 11 wt% or less, from 10 wt% or less, from 9.5 wt% or less, or from 9 wt% or less cobalt.

## Preparing Method of Catalyst for Water Electrolysis Electrode

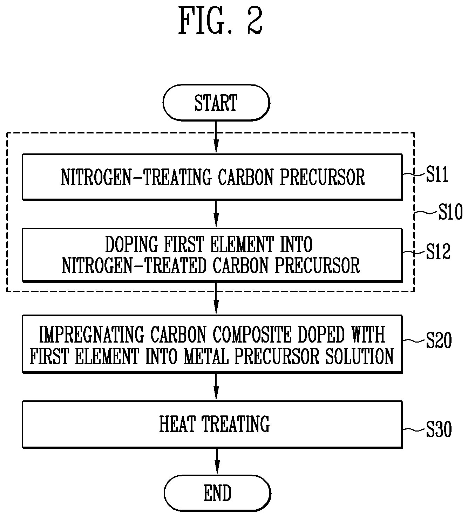

FIG. 2 is a block diagram illustrating an example of a method of preparing a catalyst for water electrolysis electrode, according to an embodiment of the present disclosure.

A method of preparing a catalyst for water electrolysis electrode according to an embodiment of the present disclosure may include: forming a carbon composite doped with a first element by contacting a carbon precursor with a first element precursor solution (S10); and impregnating the first-element doped carbon composite into a metal precursor solution (S20). The first element is iron (Fe), and the metal precursor solution may include two or more different transition metal precursors.

In an embodiment, in step S10, the carbon composite doped with the first element may be formed by contacting the carbon precursor with the first element precursor solution.

As described above, in an embodiment, the carbon precursor may include at least one selected from the group consisting of carbon black, carbon nanotube, carbon nanofiber, carbon nanoribbon, fullerene, graphene, graphene nanoplatelet, and graphite. Although not necessarily limited thereto, the carbon precursor may include, in particular, carbon black.

In an embodiment, the carbon black may be a concept including at least one of acetylene black, ketjen black, or super P.

In an embodiment, the graphite may be a concept referring to natural graphite, artificial graphite, or a mixture thereof, without limitation.

In an embodiment, the carbon precursor may be an acid-treated carbon precursor. In a specific embodiment, the carbon precursor may be prepared by contacting the carbon precursor with an acidic solution and then drying the carbon precursor.

In an embodiment, a strong acid such as nitric acid, sulfuric acid, hydrochloric acid, or a mixture thereof may be used as the acidic solution. The carbon precursor may be contacted with the acidic solution for a period of 12 hours to 36 hours. Specifically, the carbon precursor can be contacted with the acidic solution by immersing the carbon precursor in the acidic solution as described above, or by spraying the acidic solution as described above onto the carbon precursor, or the like.

In an embodiment, the carbon precursor as described above may be contacted with the first element precursor solution.

In an embodiment, the first element precursor solution may include a transition metal precursor. In a specific embodiment, the first element precursor solution may be a solution including an iron precursor.

In an embodiment, the transition metal precursor may include a transition metal salt. In a specific embodiment, the iron precursor may include an iron salt.

In an embodiment, the first element precursor solution may include at least one selected from the group consisting of iron chloride, iron nitrate, iron acetate, iron sulfate, iron trifluoromethanesulfonate, iron citrate, iron acetylacetonate, and iron pyrophosphate, or a mixture thereof. Although not necessarily limited thereto, the first element precursor solution may also be, in particular, an aqueous solution of iron chloride.

The first element precursor solution may function as an oxidizing agent. By contacting the first element precursor solution with the carbon precursor, the first element may be doped into the carbon precursor. Specifically, iron may be doped into the carbon precursor by the process as described above.

In an embodiment, the first element may be doped into the carbon precursor by contacting the carbon precursor with the first element precursor solution by introducing the carbon precursor into the first element precursor solution and stirring. For example, but not necessarily limited thereto, the stirring may be performed for 1 hour or more, 2 hours or more, 3 hours or more, or 6 hours or less. Although not necessarily limited thereto, for example, the contacting may be performed at a temperature of 10°C to 50°C.

In an embodiment, in step S10 of forming the carbon composite doped with the first element, the carbon precursor may be nitrogen-treated and then may be contacted with the first element precursor solution.

In an embodiment, step S10 may include step S11 of nitrogen-treating the carbon precursor.

In an embodiment, the nitrogen-treatment may be performed using a nitrogen-source including nitrogen atoms in a molecule, such as a compound including nitrogen, a compound including nitrogen and carbon, or other nitrogen-containing organic matters. In a non-limiting embodiment, the nitrogen-source may be prepared contained in a liquid medium, or may be prepared in a fluid flow.

For example, the nitrogen-source may include pyrrole, polypyrrole, polyvinylpyrrole, methylpolypyrrole, pyrazole, pyridine, vinylpyridine, polyvinylpyridine, pyrimidine, piperazine, imidazole, methylimidazole, aniline, polyaniline, polyimide, polyamide, polyamide-imide, acrylonitrile, polyacrylonitrile, ammonia, urea, adenine, melamine, or the like. For example, the nitrogen-source may include pyrrole and/or polypyrrole.

For example, the nitrogen-treatment may be performed by dispersing the carbon precursor in a dispersion medium and then adding the nitrogen-source as described above. In the embodiment as described above, the carbon precursor may be contacted with the nitrogen-source by dispersing the carbon precursor in the dispersion medium and then inserting the nitrogen-source and stirring to obtain a nitrogen-treated carbon precursor.

Although not necessarily limited thereto, the dispersion medium may be a mixture of water and an aliphatic alcohol of C1 to C6. In such case, specifically, the dispersion medium may be a mixture of water and propanol. The mixing ratio of the water and aliphatic alcohol mixture may be, but is not necessarily limited to, 2:8, 3:7, 4:6, 5:5, 6:4, 7:3, or 8:2 by volume.

By way of example, but not necessarily limited thereto, the stirring may be performed for 10 minutes or more, or 20 minutes or more, or for 1 hour or less, 50 minutes or less, 40 minutes or less. For example, but not necessarily limited thereto, the contacting may be performed at a temperature of 10°C to 50°C.

By step S11 as described above, the nitrogen-treated carbon precursor may be obtained. In a specific embodiment, the nitrogen-treated carbon precursor may be a polypyrrole-carbon composite. The polypyrrole-carbon composite that may be obtained by the embodiment as described above may be effectively and uniformly doped with nitrogen atoms throughout a surface thereof.

In the embodiment as described above, step S10 may further include step S12 of contacting the nitrogen-treated carbon precursor with the first element precursor solution, i.e., in the embodiment as described above, step S10 may include step S11 and step S12. In a specific embodiment, step S12 may be performed after step S11.

In an embodiment, in step S12, the nitrogen-treated carbon precursor, e.g., the polypyrrole-carbon composite, obtained in step S11 may be contacted with the first element precursor solution, resulting in the formation of the carbon composite doped with the first element and the second element, e.g., an iron-doped polypyrrole-carbon composite. The descriptions of the carbon composite doped with the first element and the second element may be the same as the descriptions of the carbon structure as set forth above, and the descriptions of contacting the nitrogen-treated carbon precursor with the first element precursor solution in step S12 may be the same as the descriptions as set forth above with regard to step S10, except that the nitrogen-treated carbon precursor is used in step S12 in place of the carbon precursor in step S10, repetitive descriptions will be omitted hereinafter.

According to the above-described embodiments, the carbon composite doped with the first element and the second element may be formed in step S10.

In an embodiment, in step S20, the carbon composite doped with the first element may be impregnated with a metal precursor solution. In a specific embodiment, in step S20, the carbon composite doped with the first element and the second element may be impregnated with the metal precursor solution.

In an embodiment, the metal precursor solution may include two or more different transition metal precursors.

In an embodiment, the metal precursor solution may include two or more different period 4 transition metal precursors.

In an embodiment, the metal precursor solution may include a nickel (Ni) precursor and a cobalt (Co) precursor. In a specific embodiment, the metal precursor solution may be a solution including a nickel precursor and a cobalt precursor.

In an embodiment, the nickel precursor may include a nickel salt. Non-limiting examples of the nickel precursor including the nickel salt may include nickel nitrate, nickel sulfate, nickel fluoride, nickel chloride, nickel bromide, nickel acetate, nickel acetylacetonate, nickel citrate, nickel phosphate, and the like.

In an embodiment, the cobalt precursor may include a cobalt salt. Non-limiting examples of the cobalt precursor including the cobalt salt may include cobalt nitrate, cobalt sulfate, cobalt fluoride, cobalt chloride, cobalt bromide, cobalt acetate, cobalt acetylacetonate, cobalt citrate, cobalt phosphate, and the like.

As a non-limiting example, the metal precursor solution may include the nickel precursor and the cobalt precursor in a ratio of 9:1, 8:2, 7:3, 6:4, 5:5, 4:6, 3:7, 2:8, or 1:9 by weight.

As a solvent in the metal precursor solution, a non-limiting aliphatic alcohol may be used. In particular, aliphatic alcohols of C1 to C4 may be used. In an embodiment, the solvent may be, but is not necessarily limited to, propanol.

In a non-limiting embodiment, the impregnation may be carried out for 10 minutes or more, 30 minutes or more, 1 hour or more, 2 hours or more, or 3 hours or more, or 48 hours or less, 36 hours or less, 24 hours or less, 20 hours or less, 18 hours or less, or 15 hours or less. In a non-limiting embodiment, the impregnation may be performed while subjecting the solution to a heat of 20°C or more, 30°C or more, 50°C or more, 70°C or more, 90°C or more, 100°C or more, 150°C or more, or 200°C or more.

In an embodiment, in step S20, the carbon composite doped with the first element formed in step S10 may be impregnated with the metal precursor solution as described above, more particularly the metal precursor solution including the nickel precursor and the cobalt precursor, such that nickel and cobalt are deposited on the surface of the carbon composite in the form of alloy nanoparticle, resulting in a carbon structure supported on the surface of the carbon composite. In step S20 as described above, a portion of the first element doped in the carbon composite, specifically the iron element, may be partially migrated to the alloy nanoparticle supported on the carbon composite. As a result, a catalyst for water electrolysis electrode including the carbon structure doped with the first element and the second element which is formed in steps S10 and S20, and the alloy nanoparticle supported on the surface of the carbon structure and doped with the first element may be prepared.

In an embodiment, the method may further include heat treating the metal precursor solution impregnated with the carbon composite doped with the first element in an inert atmosphere (S30). In other words, the method of preparing the catalyst for water electrolysis electrode according to an embodiment of the present disclosure may include step S30 of heat treating the metal precursor solution impregnated with the carbon composite by step S20, in an inert atmosphere. Steps S20 and S30 may be carried out sequentially, or at least part of steps may be carried out in parallel.

In an embodiment, step S30 may be performed under an inert atmosphere. For example, step S30 may be performed under an inert atmosphere formed by an inert gas such as nitrogen, helium, or argon. Although not necessarily limited thereto, step S30 may be performed under an inert atmosphere formed by nitrogen gas.

In an embodiment, in the heat-treating step (S30) heat treatment may be performed at a temperature of 600°C to 1000°C for 30 minutes to 2 hours, i.e., in step S30, the metal precursor solution impregnated with the carbon composite by step S20 may be heat treated for 30 minutes to 2 hours at a temperature of 600°C to 1000°C under a nitrogen atmosphere.

In a non-limiting embodiment, the heat treatment temperature in step S30 may be 650°C or higher, 700°C or higher, or 750°C or higher, or 950°C or lower, 900°C or lower, 880°C or lower, or 850°C or lower. In a non-limiting embodiment, the time required for step S30 may be 40 minutes or more, 50 minutes or more, 55 minutes or more, or 110 minutes or less, 100 minutes or less, 90 minutes or less, 80 minutes or less, or 70 minutes or less.

In an embodiment, in step S30, the metal precursor solution which is impregnated with the carbon composite by step S20 may be pyrolyzed by heat treatment in an inert atmosphere. Thereby, the alloy nanoparticle may be controlled to be evenly distributed on the surface of the carbon composite, and the hydrogen evolution performance of the catalyst finally prepared may be further improved.

## Water Electrolysis Electrode

A water electrolysis electrode according to an embodiment of the present disclosure includes a substrate; and a catalyst for water electrolysis electrode loaded onto the substrate, the catalyst for water electrolysis electrode includes a carbon structure doped with a first element and a second element, and an alloy nanoparticle doped with the first element, the alloy nanoparticle is supported on a surface of the carbon structure, and the first element may be iron (Fe).

In an embodiment, the substrate may include at least one of titanium, nickel, chromium, aluminum, stainless steel, or any alloy thereof. However, embodiments are not limited thereto, and the substrate may include any material known in the art to be capable of maintaining conductivity for use in water electrolysis electrodes.

In an embodiment, the substrate may have a variety of shapes, such as a rod, a wire, a plate, or mesh.

In an embodiment, the catalyst for water electrolysis electrode includes the carbon structure doped with the first element and the second element and the alloy nanoparticle supported on the surface of the carbon structure, and the alloy nanoparticle may be doped with the first element.

In an embodiment, the catalyst for water electrolysis electrode may be a catalyst for water electrolysis electrode according to an embodiment of the present disclosure as described above, or may be a catalyst for water electrolysis electrode prepared according to a method for preparing a catalyst for water electrolysis electrode according to an embodiment of the present disclosure as described above.

In an embodiment, the carbon structure may include at least one selected from the group consisting of carbon black, carbon nanotube, carbon nanofiber, carbon nanoribbon, fullerene, graphene, graphene nanoplatelet, and graphite. Although not necessarily limited thereto, the carbon structure may include, in particular, carbon black.

In an embodiment, the second element may be nitrogen.

In an embodiment, the alloy nanoparticle may be a nickel-cobalt (Ni-Co) alloy nanoparticle.

In an embodiment, the nickel-cobalt alloy nanoparticle may include an excess of cobalt relative to nickel.

In an embodiment, the catalyst for water electrolysis electrode may be an Fe-N-C based catalyst supporting an iron (Fe)-doped nickel-cobalt alloy nanoparticle.

In an embodiment, the first element may be included in an amount from 0.01 wt% to 0.10 wt%, based on the total weight of the catalyst for water electrolysis electrode. In a specific embodiment, the content of the first element may be 0.02 wt% or more, 0.03 wt% or more, 0.04 wt% or more, or 0.05 wt% or more, or 0.09 wt% or less, 0.08 wt% or less, or 0.07 wt% or less. In other words, in the catalyst for water electrolysis electrode, the first element may be included in an amount from 0.01 wt% to 0.10 wt%, and in a specific embodiment, may be included in an amount from 0.02 wt% or more, 0.03 wt% or more, 0.04 wt% or more, or 0.05 wt% or more, or 0.09 wt% or less, 0.08 wt% or less, or 0.07 wt% or less.

In an embodiment, the first element may be included in an amount from 0.10 wt% to 0.50 wt% based on the total weight of the alloy nanoparticle. In a specific embodiment, the content of the first element may be greater than or equal to 0.20 wt%, greater than or equal to 0.25 wt%, greater than or equal to 0.30 wt%, or less than or equal to 0.45 wt%, or less than or equal to 0.40 wt%. In other words, in the alloy nanoparticle, the first element may be included in an amount between 0.10 wt% to 0.50 wt%, and in a specific embodiment, may be included in an amount greater than or equal to 0.20 wt%, greater than or equal to 0.25 wt%, or greater than or equal to 0.30 wt%, or less than or equal to 0.45 wt%, or less than or equal to 0.40 wt%.

In an embodiment, the second element may be included in an amount from 0.1 wt% to 1.0 wt% based on the total weight of the catalyst for water electrolysis electrode. In a specific embodiment, the content of the second element may be 0.2 wt% or more, 0.3 wt% or more, 0.4 wt% or more, or 0.5 wt% or more, or 0.9 wt% or less, 0.8 wt% or less, or 0.7 wt% or less. In other words, in the catalyst for water electrolysis electrode, the second element may be included in an amount of 0.1 wt% to 1.0 wt%, and in a specific embodiment, may be included in an amount of 0.2 wt% or more, 0.3 wt% or more, 0.4 wt% or more, or 0.5 wt% or more, or 0.9 wt% or less, 0.8 wt% or less, or 0.7 wt% or less.

In addition, the descriptions of the catalyst for water electrolysis electrode with reference to FIGS. 1 and 2 as set forth above may be applied without limitation.

In an embodiment, the catalyst for water electrolysis electrode may be loaded onto the substrate to form the water electrolysis electrode according to an embodiment of the present disclosure.

In an embodiment, the loading may not be particularly limited as long as it corresponds to a method known in the art. For example, various methods of depositing, spraying, coating, or the like, the catalyst on the substrate are considered.

In an embodiment, a loading amount of the catalyst for water electrolysis electrode may be from 0.1 $mg/cm^2$ to 5.0 $mg/cm^2$, i.e., in an embodiment, the water electrolysis electrode may be loaded with a loading amount of catalyst for water electrolysis electrode from 0.1 $mg/cm^2$ to 5.0 $mg/cm^2$. In a specific embodiment, the loading amount may be 0.2 $mg/cm^2$ or more, 0.3 $mg/cm^2$ or more, 0.5 $mg/cm^2$ or more, 0.7 $mg/cm^2$ or more, 0.9 $mg/cm^2$ or more, 1.0 $mg/cm^2$ or more, 1.2 $mg/cm^2$ or more, or 1.6 $mg/cm^2$ or more, or 4.8 $mg/cm^2$ or less, 4.5 $mg/cm^2$ or less, 4.3 $mg/cm^2$ or less, 4.0 $mg/cm^2$ or less, 3.5 $mg/cm^2$ or less, 3.0 $mg/cm^2$ or less, 2.7 $mg/cm^2$ or less, or 2.2 $mg/cm^2$ or less.

In an embodiment, the water electrolysis electrode may have a Tafel slope of 200 mV/dec or less.

In an embodiment, the Tafel slope may refer to a slope of a Tafel plot curve plotted based on the polarization results of a hydrogen evolution reaction measured at a scan rate of 5 mV/s in a 1 M KOH solution.

The Tafel slope may mean a value represented by B in a relationship defined by the relational expression below.

$$[\text{Relational Expression}].$$

$$\eta = B\log(j/j_0)$$

In the above relational expression, $\eta$ is the overpotential, j is the current density, and $j_0$ is the exchange current density.

The smaller the Tafel slope above, the more favorable the hydrogen evolution reaction is in terms of reaction kinetics.

In a specific embodiment, the Tafel slope may be 190 mV/dec or less, 180 mV/dec or less, 170 mV/dec or less, or 165 mV/dec or less.

### Water Electrolysis System

A water electrolysis electrode according to an embodiment of the present disclosure may be one element of a water electrolysis system.

In an embodiment, the water electrolysis system may be provided as a device including a membrane electrode assembly. The membrane electrode assembly may include a separator, a cathode located in one space separated by the separator, an anode located in another space separated by the separator, and an electrolyte in which the cathode and the anode are immersed or which is at least in contact with the cathode and the anode. The water electrolysis electrode according to an embodiment of the present disclosure may be provided as the cathode within the water electrolysis system.

For example, the separator may function as an ion exchange membrane (cation exchange membrane or anion exchange membrane, as an example, an anion exchange membrane). For example, the separator may be a porous polymeric membrane, a porous ceramic membrane, or the like.

For example, for the anode, a conductive substrate may be used as in the above-described water electrolysis electrode, and the conductive substrate may be loaded with an anode catalyst. As the anode catalyst, a precious metal-based catalyst known in the art, such as iridium, palladium, or the like, may be used in order to be conductive without side reactions with the electrolyte and at the same time exhibit a low overpotential in the oxygen evolution reaction, or a non-precious metal-based catalyst may be used.

For example, the electrolyte may be an alkaline electrolyte. Examples of the electrolyte may include, but not necessarily limited thereto, lithium hydroxide, sodium hydroxide, potassium hydroxide, sodium bicarbonate, potassium bicarbonate, or the like. Although not necessarily limited thereto, the electrolyte may have a pH of 9 or greater, 9.5 or greater, 10 or greater, 10.5 or greater, 11 or greater, 11.5 or greater, or 12 or greater.

The water electrolysis system according to an embodiment may be preferably used in, for example, a water electrolysis device, a redox flow cell, or another fuel cell, but is not necessarily limited thereto.

Hereinafter, embodiments of the present disclosure will be further described with reference to specific experimental examples. The embodiments and comparative examples included in the experimental examples are merely illustrative of the invention and are not intended to limit the scope of the appended patent claims, and it will be apparent to those skilled in the art that various changes and modifications to the embodiments are possible within the scope and spirit of the disclosure, and that such changes and modifications fall within the scope of the appended patent claims.

**Preparation Example**

(Example)

(1) Preparation of Catalyst for Water Electrolysis Electrode

Vulcan XC-72R Carbon (purchased from Fuel cell store) was acid treated using a mixed solution of 6 M of $HNO_3$ and 6 M of $H_2SO_4$ for 24 hours, and then dried to obtain 8 g of acid treated dry carbon. The obtained 8 g of carbon was dispersed in a 1:1 (v:v) mixed solution of propanol (Sigma-Aldrich)/distilled water, and then 100 mL of pyrrole monomer (Sigma-Aldrich, 98%) was added to the above solution and stirred for 30 minutes. Meanwhile, 0.041 mol of iron chloride hexahydrate (Alfa Aesar) was weighed and dissolved in 50 mL of distilled water and added to the above stirred suspension and stirred again for 4 hours to prepare iron-doped polypyrrole-carbon composite (Fe-PPyCC).

Meanwhile, 0.062 mmol of nickel nitrate hexahydrate (Sigma-Aldrich) and 0.563 mmol of cobalt nitrate hexahydrate (Sigma-Aldrich) were weighed and dissolved in 20 mL of propanol (Sigma-Aldrich) to prepare a metal precursor solution. To the prepared metal precursor solution, 330 mg of the iron-doped polypyrrole-carbon composite prepared as described above was added and deposited under heat for sufficient time. Then, the catalyst for water electrolysis electrode was finally prepared by pyrolysis at 800 °C for 1 hour under $N_2$ condition.

(2) Preparation of Water Electrolysis Electrode

10 mg of the catalyst for water electrolysis electrode prepared above and 40 μL of a solution of a commercial sulfonated tetrafluoroethylene based fluoropolymer-copolymer (Nafion, using a 5 wt% Nafion solution, Sigma-Aldrich) were added to 1.5 mL of isopropanol (IPA)/distilled water 4:1 (v:v), and a uniformly mixed ink was prepared using an ultrasonic disperser.

The ink prepared above was loaded onto a commercial Gas Diffusion Layer substrate (GDL, Sigracet 39 BB, Fuel cell store) at 2mg/cm$^2$ using an air spray gun to finally prepare the electrolysis electrode.

(Comparative Example 1)

(1) Preparation of Catalyst for Water Electrolysis Electrode

The catalyst for water electrolysis electrode was prepared the same as in Example, except that the metal precursor solution was prepared by dissolving only 0.062 mmol of nickel nitrate hexahydrate in 20 mL of propanol, without adding cobalt nitrate hexahydrate.

(2) Preparation of Water Electrolysis Electrode

The water electrolysis electrode was prepared the same as in Example, except that the catalyst for water electrolysis electrode prepared as described in Comparative Example 1 (1) above was used.

(Comparative Example 2)

(1) Preparation of Catalyst for Water Electrolysis Electrode

The catalyst for water electrolysis electrode was prepared the same as in Example, except that the metal precursor solution was prepared by dissolving only 0.563 mmol of cobalt nitrate hexahydrate in 20 mL of propanol, without adding nickel nitrate hexahydrate.

(2) Preparation of Water Electrolysis Electrode

The water electrolysis electrode was prepared the same as in Example, except that the catalyst for water electrolysis electrode prepared as described in Comparative Example 2 (1) above was used.

(Comparative Example 3)

(1) Preparation of Catalyst for Water Electrolysis Electrode

The iron-doped polypyrrole-carbon composite (Fe-PPyCC) prepared by the same method as in Example was used as a catalyst for water electrolysis electrode without any further subsequent treatment.

(2) Preparation of Water Electrolysis Electrode

The water electrolysis electrode was prepared the same as in Example, except that the catalyst for water electrolysis electrode as described in Comparative Example 3 (1) above was used.

(Comparative Example 4)

The water electrolysis electrode was prepared the same as in Example, except that a commercial reduction electrode catalyst, Pt/C catalyst (40% Platinum on Vulcan XC-72R, Fuel cell store), was used as the catalyst for water electrolysis electrode.

**Evaluation Example**

**Evaluation Example 1. Evaluation of Physicochemical Catalyst Characteristics**

(1) Transmission Electron Microscopy (TEM)/Energy Dispersive X-ray Spectroscopy (EDS) mapping analysis

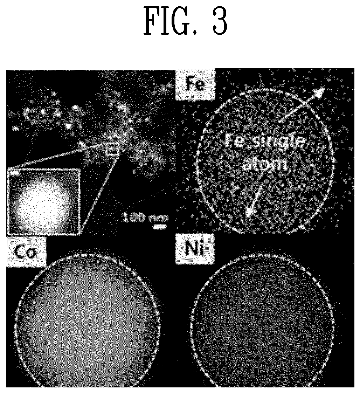

FIG. 3 is an image showing TEM imaging and EDS mapping results of a catalyst for water electrolysis electrode of Example.
The catalyst for water electrolysis electrode prepared in Example was observed and mapped using a high-resolution transmission electron microscope (JEM-2100F, JEOL LTD) equipped with a High-Angle Annular Dark-Field Scanning Transmission Electron Microscope (HAADF-STEM) detector, and is shown in FIG. 3.
As shown in FIG. 3, it can be seen that a nanoparticle with an average size of 25 nm is present in the catalyst for water electrolysis electrode prepared in Example, and that nickel and cobalt are present in an alloyed form with nickel and cobalt present in the same position. Furthermore, it can be seen that a monatomic iron atom is present in the carbon structure as well as in the nickel-cobalt alloy particle.

(2) X-ray Diffraction (XRD) Analysis

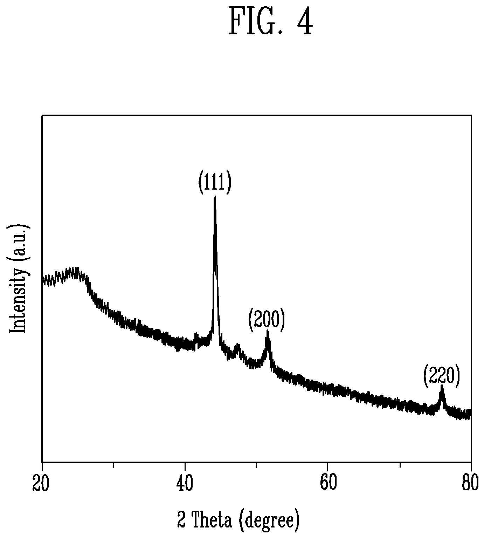

FIG. 4 is a graph showing an XRD pattern of the catalyst for water electrolysis electrode of Example.
An X-ray diffraction analyzer (PANalytical B.V) was used to examine a metal crystal plane of the catalyst for water electrolysis electrode prepared in Example. The measurements were made at 40 kV and 100 mA using a Cu K$\alpha$ line and were taken over a range of 10 to 80° at a scan rate of 6° per minute with an interval of 0.01°. The measured pattern is shown in FIG. 4.
As a result of the analysis, the major peaks shown in FIG. 4 are indicative of a nickel-cobalt alloy with a face-centered cubic lattice (FCC) structure, thus confirming the presence of an alloy of nickel and cobalt in the catalyst for water electrolysis electrode prepared in Example, thereby confirming that the nanoparticle of Example is composed of a nickel-cobalt alloy nanoparticle. However, because iron doped into the nickel-cobalt alloy nanoparticle according to Example is present in trace amounts in the form of monatomic atom, it was not found in the pattern of Fig. 4 according to the X-ray diffraction analysis..

(3) Element Content Analysis

Inductively coupled plasma (ICP) mass spectrometry was used to analyze the metal element content of the catalyst for water electrolysis electrode prepared in Example. The catalyst for water electrolysis electrode prepared in Example was analyzed for the content of metal element present in the catalyst using an inductively coupled plasma atomic emission spectroscope (ICP-AES, NexION 300X, PerkinElmer), and the results of the analysis are shown in Table 1 below.

[Table 1]

| Element | Content (wt%) |
|---------|---------------|
| Ni | 0.96 |
| Co | 8.00 |
| Fe | 0.06 |

An elemental analyzer was used to analyze the content of nitrogen element in the catalyst for water electrolysis electrode prepared in Example. The catalyst for water electrolysis electrode prepared in Example was analyzed using a nitrogen-oxygen-hydrogen analyzer (ONH836, LECO Corp) and the nitrogen gas emitted by melting a sample in an electric furnace in a helium gas atmosphere at a constant power of 4500 W was analyzed by TCD to analyze the content of nitrogen present in the catalyst, and the results of the analysis are shown in Table 2 below.

[Table 2]

| Element | Content (wt%) |
|---------|---------------|
| N | 0.6 |

**Evaluation Example 2. Evaluation of Electrochemical Characteristics of Electrode**

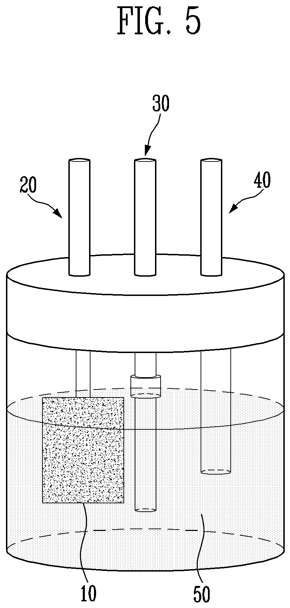

FIG. 5 is a diagram illustrating an example of a three-electrode system configured to evaluate electrochemical characteristics.

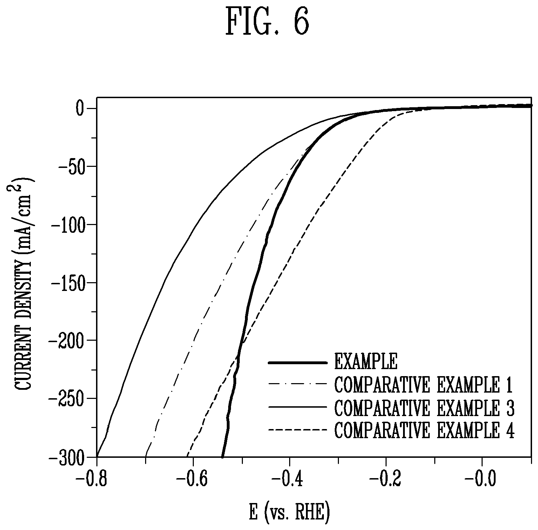

FIG. 6 is a graph of current density vs. voltage curves by evaluating hydrogen evolution reaction performance of each of the water electrolysis electrodes of Example, Comparative Example 1, Comparative Example 3, and Comparative Example 4.

Each of the water electrolysis electrodes prepared in the Example and Comparative Examples were used as a working electrode 20, an Hg/HgO electrode as a reference electrode 30, and a graphite rod as a counter electrode 40 to form the three-electrode system as shown in FIG. 5. Each electrode was immersed in 1 M of KCl solution 50.

The performance of the hydrogen evolution reaction was evaluated using each of the three-electrode systems described above, with the water electrolysis electrode prepared in each of Example and Comparative Examples as the working electrode. Each three-electrode system was evaluated by measuring the polarization of the hydrogen evolution reaction at a scan rate of 5 mV/s under room temperature conditions. All measurements were expressed as "vs RHE (reversible hydrogen electrode)", and the evaluation results are shown in FIG. 6 and Table 3 below.

[Table 3]

| | Overpotential (V vs RHE) at current density 200mA/cm$^2$ | Overpotential (V vs RHE) at current density 300 mA/cm$^2$ |
|---|---|---|
| Example | 0.50 | 0.54 |
| Comparative Example 1 | 0.60 | 0.70 |
| Comparative Example 3 | 0.71 | 0.80 |
| Comparative Example 4 | 0.50 | 0.61 |
| *IR Compensation: 80 | | |

Referring to FIG. 6 and Table 3 above, it can be seen that when comparing the hydrogen evolution reaction performance at the current density of 200 mA/cm$^2$, the catalyst of Example has a similar level of performance to the catalyst of Comparative Example 4, which is a commercial platinum (precious metal-based) catalyst, and when comparing the hydrogen evolution reaction performance at the current density of 300 mA/cm$^2$, the catalyst of Example has the superior hydrogen evolution reaction performance to the catalyst of Comparative Example 4, which is a commercial platinum (precious metal-based) catalyst.

Specifically, it can be seen that only 0.54 V of overpotential is required to obtain the current density of 300 mA/cm$^2$ using the water electrolysis electrode with the catalyst of Example, which corresponds to an overpotential of about 0.07 V lower than that of the catalyst of Comparative Example 4, which is a commercial platinum (precious metal-based) catalyst. This result suggests that the catalyst of Example has superior performance in hydrogen evolution reaction compared to a commercial platinum catalyst.

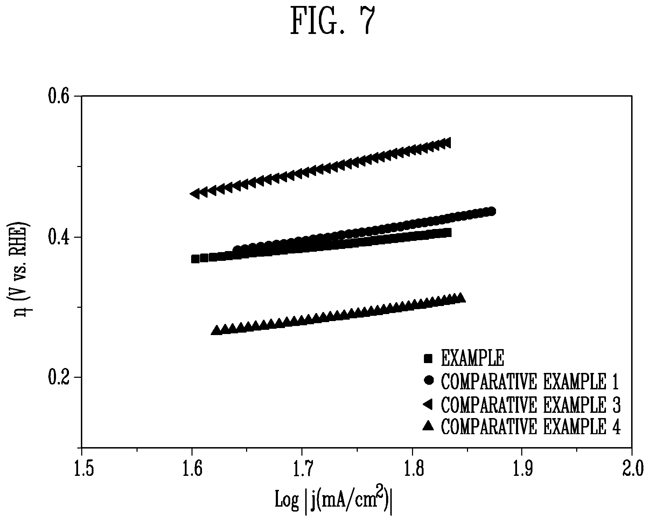

FIG. 7 is a graph of overpotential vs. log current density curves by evaluating the hydrogen evolution reaction performance of each of the water electrolysis electrodes of Example, Comparative Example 1, Comparative Example 3, and Comparative Example 4.

The slopes of the Tafel plots according to Example and Comparative Examples in FIG. 7 are shown in Table 4 below.

[Table 4]

|  | Tafel Slope (mV/dec) |
| --- | --- |
| Example | 162.6 |
| Comparative Example 1 | 239.4 |
| Comparative Example 3 | 321.4 |
| Comparative Example 4 | 207.3 |

Referring to FIG. 7 and Table 4 above, the catalyst of Example shows a smaller slope of about 45 mV/dec when compared to the catalyst of Comparative Example 4, which is a commercial platinum catalyst. This result suggests that the catalyst of Example has superior performance in terms of reaction kinetics in the hydrogen evolution reaction compared to a commercial platinum catalyst.

As a result of the evaluation, it was confirmed that the water electrolysis electrode with the catalyst for water electrolysis electrode according to an embodiment of the present disclosure has the superior hydrogen evolution reaction performance compared to the electrode with a commercial platinum catalyst. Referring to (3) of Evaluation Example 1 above, considering that the catalyst of Example can have a transition metal content of 1/4 of that of a commercial platinum catalyst, it can be confirmed that the catalyst for water electrolysis electrode according to an embodiment of the present disclosure can provide a non-precious metal-based catalyst with superior hydrogen evolution reaction performance compared to a conventional commercial precious metal-based catalyst even with a low transition metal loading amount.

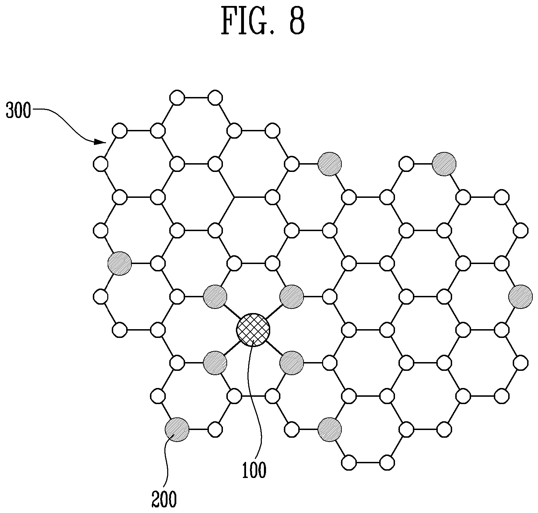

FIG. 8 is a diagram illustrating an example of a surface structure of the catalyst for water electrolysis electrode of Comparative Example 3. In the example surface structure illustrated in FIG. 8, an alloy nanoparticle might not be supported on the surface of the carbon structure 300 in the catalyst of Comparative Example 3, unlike Example.

The catalyst of Example was found to have superior hydrogen evolution reaction performance compared to the catalysts of Comparative Examples other than Comparative Example 3.

The above results are believed to be attributable to the fact that the catalyst for water electrolysis electrode according to one embodiment of the present disclosure may cause unconventional reaction specificity due to the nickel-cobalt-iron interaction as an iron monatomic atom is introduced into the nickel-cobalt alloy nanoparticle that serves as the main active site of the catalyst, and that the iron monatomic atom doped into the surface of the carbon structure, which is present in the vicinity of the nickel-cobalt alloy nanoparticle, may also contribute to the performance improvement in part by further interacting with the alloy nanoparticle.

The descriptions as set forth above are merely examples of applying the principles of the disclosure, and other configurations may be further included without departing from the scope of the disclosure.

According to one aspect of the present disclosure, as a non-precious metal-based catalyst for water electrolysis electrode with low transition metal loading, a catalyst for water electrolysis electrode having excellent hydrogen evolution reaction performance, and a water electrolysis electrode including the catalyst can be provided.

According to another aspect of the present disclosure, a method of preparing a catalyst for water electrolysis electrode that can efficiently prepare the catalyst for water electrolysis electrode can be provided.

**Claims**

1. A catalyst for water electrolysis electrode (10), comprising:

   a carbon structure (300) doped with a first element (100) and a second element (200); and
   an alloy nanoparticle (400) doped with the first element (100),
   wherein the alloy nanoparticle (400) is supported on a surface of the carbon structure (300), and
   wherein the first element (100) is iron (Fe).

2. The catalyst for water electrolysis electrode (10) of claim 1, wherein the carbon structure (300) includes at least one selected from a group consisting of carbon black, carbon nanotube, carbon nanofiber, carbon nanoribbon, fullerene, graphene, graphene nanoplatelet, and graphite.

3. The catalyst for water electrolysis electrode of claims 1 or 2, wherein the second element is nitrogen.

4. The catalyst for water electrolysis electrode (10) of any one of claims 1 to 3, wherein the alloy nanoparticle (400) is formed from non-precious transition metals, preferably is a nickel-cobalt (Ni-Co) alloy nanoparticle (400), more preferably, wherein the nickel-cobalt alloy nanoparticle (400) includes an excess of cobalt relative to nickel.

5. The catalyst for water electrolysis electrode of any one of claims 1 to 4, wherein the catalyst for water electrolysis electrode (10) is an Fe-N-C based catalyst supporting a nickel-cobalt alloy nanoparticle (400) doped with iron (Fe).

6. The catalyst for water electrolysis electrode of any one of claims 1 to 5, wherein the first element (100) is included in an amount from 0.01 wt% to 0.10 wt% based on a total weight of the catalyst for water electrolysis electrode (10).

7. A method of preparing a catalyst for water electrolysis electrode (10), the method comprising:

forming a carbon composite doped with a first element (100) by contacting a carbon precursor with a first element precursor solution; and
impregnating the carbon composite doped with the first element (100) into a metal precursor solution,
wherein the first element (100) is iron (Fe), and
wherein the metal precursor solution includes two or more different transition metal precursors.

8. The method of claim 7, wherein (a) the carbon precursor includes at least one selected from a group consisting of carbon black, carbon nanotube, carbon nanofiber, carbon nanoribbon, fullerene, graphene, graphene nanoplatelet, and graphite; preferably the carbon precursor includes, preferably is, carbon black; and/or (b) the first element precursor solution includes at least one selected from a group consisting of iron chloride, iron nitrate, iron acetate, iron sulfate, iron trifluoromethanesulfonate, iron citrate, iron acetylacetonate, and iron pyrophosphate; or a mixture thereof, and/or (c) the metal precursor solution includes a nickel (Ni) precursor and a cobalt (Co) precursor.

9. The method of claims 7 or 8, wherein, in forming the carbon composite doped with the first element (100), the carbon precursor is nitrogen-treated and then is contacted with the first element (100) precursor solution,
optionally, further comprising heat treating the metal precursor solution impregnated with the carbon composite doped with the first element (100) in an inert atmosphere, preferably, in heat treating the metal precursor solution, the metal precursor solution is heat treated for 30 minutes to 2 hours at a temperature of 600°C to 1000°C.

10. A water electrolysis electrode, comprising:

a substrate; and
a catalyst for water electrolysis electrode (10) as defined in any one of claims 1 to 9.

11. The water electrolysis electrode of claim 10, wherein (a) a loading amount of the catalyst for water electrolysis electrode (10) is from 0.1 mg/cm$^2$ to 5.0 mg/cm$^2$, and/or (b) the water electrolysis electrode has a Tafel slope of 200 mV/dec or less.

12. A water electrolysis system, comprising the catalyst for water electrolysis electrode (10) as defined in any one of claims 1 to 6, or comprising the water electrolysis electrode according to claim 10 or 11.

13. The water electrolysis system according to claim 12, comprising membrane electrode assembly, optionally wherein the membrane electrode assembly includes a separator, a cathode located in one space separated by the separator, an anode located in another space separated by the separator, and an electrolyte in which the cathode and the anode are immersed or which is at least in contact with the cathode and the anode.

14. Use of a catalyst as defined in any one of claims 1 to 6 for water electrolysis.

15. Use of a catalyst according to claim 14, wherein the catalyst is included in a water electrolysis electrode (10) or in a water electrolysis system.

FIG. 1

# FIG. 2

```
                        ┌─────────────┐
                        │    START    │
                        └──────┬──────┘
          ┌────────────────────┼──────────────────────────┐
          │                    ▼                           │
          │  ┌──────────────────────────────────────┐      │
          │  │ NITROGEN-TREATING CARBON PRECURSOR    │──────┼─ S11
          │  └──────────────────┬───────────────────┘      │
          │                     │                          │──S10
          │                     ▼                          │
          │  ┌──────────────────────────────────────┐      │
          │  │        DOPING FIRST ELEMENT INTO      │──────┼─ S12
          │  │    NITROGEN-TREATED CARBON PRECURSOR  │      │
          │  └──────────────────────────────────────┘      │
          └─────────────────────┬──────────────────────────┘
                                ▼
          ┌──────────────────────────────────────────┐
          │  IMPREGNATING CARBON COMPOSITE DOPED WITH │──── S20
          │  FIRST ELEMENT INTO METAL PRECURSOR SOLUTION │
          └──────────────────────┬───────────────────┘
                                 ▼
          ┌──────────────────────────────────────────┐
          │            HEAT TREATING                  │──── S30
          └──────────────────────┬───────────────────┘
                                 ▼
                        ┌─────────────┐
                        │     END     │
                        └─────────────┘
```

# FIG. 3

# FIG. 4

# FIG. 5

# FIG. 6

# FIG. 7

# FIG. 8